# EUROPEAN PATENT APPLICATION

(11) **EP 1 672 531 A2**
(43) Date of publication of application: **21.06.2006**
(21) Application number: 05110087.3
(22) Date of filing: 27.10.2005
(51) Int. Cl.: G06F 17/27, G06F 17/30

(54) **Method and apparatus for generation of text documents**

(30) Priority: 14.12.2004 EP 04106536
(71) Applicant: International Business Machines Corporation, Armonk, N.Y. 10504 (US)
(72) Inventor: Altevogt, Peter, 76275 Etttlingen (DE); Seiffert, Roland, 71083 Herrenberg (DE); Codron, Mattieu, 78600 Maisons-Laffitte (FR)
(74) Representative: Klein, Hans-Jörg

(57) **Abstract**

A method for the generation of large volumes of text documents comprises the steps of collecting a set of unstructured text documents as training documents and choosing a language model (21). New documents are generated by using the language model and its parameters and by using additional words beyond the words contained in the training documents (25). A n-gram model or a probabilistic deterministic context-free grammar (PCFG) model may be used as language model. For the generation of structured documents a language model for modelling the text is combined with a probabilistic deterministic finite automata (PDFA) for modelling the structure of the documents. The combined model is used to generate new documents from the scratch or by using the results of an analysis of a set of training documents. Since the models reflecting various essential features of a natural structured document collection, these features are adopted into the generated document collection (26) which is suited to evaluate the performance and scalability of natural language processing (NLP) algorithms.

## Description

### Field of the invention

The invention relates to the generation of large volumes of text documents for test proposes.

### Background of the invention

Natural language processing (NLP) systems such as search engines or text mining software provide essential tools for retrieving information from collections of digitalized text documents. Because of the strong growth of the amount of digital text data to be processed, excellent performance and scalability are essential for these systems. In order to effectively test performance and scalability, huge text document collections with specific properties concerning text and document structure are needed. Although some document collections exist for particular languages such as, for example, the Wall Street Journal or the Gutenberg collections (Gutenberg Project, http://promo.net/pg/), such collections are sometimes not useful enough since they are too specific in terms of specific types of documents like newspaper articles or literature texts. Existing document collections may also cover only a few specific target languages or do not have the appropriate document structure or such document collections are simply too small. On the other hand, document collections containing artificial documents in general do not reflect important properties of natural text document collections, e.g. fulfilling Zipf's law and Heap's law (2). Because many algorithms for natural language processing (NPL) make extensively use of these properties, artificial text document collections are in general not well suited for testing performance and scalability of NLP programs.

It is therefore highly desirable to create artificial text document collections which are large enough and have the essential properties of natural text document collections. These properties may be either specified by the user or learned from a set of training documents.

US-A-5,418,951 discloses a method to perform the retrieval of text documents by using language modelling in advance of a comparison of a query with the documents contained in a database. This method includes the steps of sorting the documents of a database by language or topic and of creating n-grams for each document and for the query. The comparison between query and documents is performed on the basis of the n-grams.

US-A-5,467,425 discloses a system and a method for creating a language model which is usable in speech or character recognizers, language translators, spelling checkers or other devices. This system and method comprises a n-gram language modeller which produces n-grams from a set of training data. These n-grams are separated into classes. A count is determined for each n-gram which indicates the number of times the n-gram occurs in the training data where a class is defined by a threshold value. Complement counts indicate those n-grams which are not previously associated with a class and assign these to a class if they are larger than a second threshold value. The system and method uses these factors to determine the probability of a given word occurring on the basis that the previous two words have occurred.

### Summary of the invention

An objective of the invention is to provide a method for modelling and analyzing text documents and for generating large amounts of new documents having the essential properties of natural text document collections.

The invention, as defined in the claims, comprises the steps of collecting a set of text documents as training documents and choosing a language model to be used. New documents are generated by using this model and by using additional words beyond the words contained in the training documents. The new documents comprising the same distribution of their length as the training documents. For securing the quality of the new documents it is determined if the deviation of the word frequency as a function of the word rank from Zipf's law and the deviation of the growth of the vocabulary as a function of the number of terms from the Heap's law are below user defined thresholds. Only those new documents are accepted which fulfil these conditions.

According to one aspect of the invention n-gram robabilities are used as language model. According to another aspect of the invention a probabilistic deterministic context- free grammar (PCFG) is used as language model.

The invention, as defined in the claims, further provides modelling of structured text documents by combining language models for modelling the text with probabilistic deterministic finite automata (PDFA) for modelling the structure of the documents. The language models under consideration are n-gram models and probabilistic context-free grammar (PCFG) models. The combined models are used to generate new documents from the scratch or by using the results of an analysis of a set of training documents. Since the models reflecting various essential features of natural structured document collections, these features are adopted into the generated document collections which is therefore suited to evaluate the performance and scalability of natural language processing (NLP) algorithms relying on these features.

### Brief description of the drawings

Embodiments of the invention are subsequently described with reference to drawings which show:
Figure 1 a schematic block diagram of a computer system which may be used to operate the invention;
Figure 2 a high level flow diagram of the document generation process according to the invention;
Figure 3 a high level flow diagram of a training process as used in the document generation process of Figure 1;
Figure 4 a flow diagram of document text generation according to the invention using a n-gram model with training documents;
Figure 5 a flow diagram of document text generation according to the invention using a pre-computed n-gram model;
Figure 6 a flow diagram of document text generation according to the invention using a probabilistic deterministic context-free grammar (PCFG) model with training documents;
Figure 7 a follow diagram of document text generation according to the invention directly using a given PCFG model;
Figure 8 a flow diagram of a structured document text generation according to the invention using training documents; and
Figure 9 a flow diagram of a structured document text generation according to the invention without training documents.

### Detailed description of the embodiments shown in the drawings

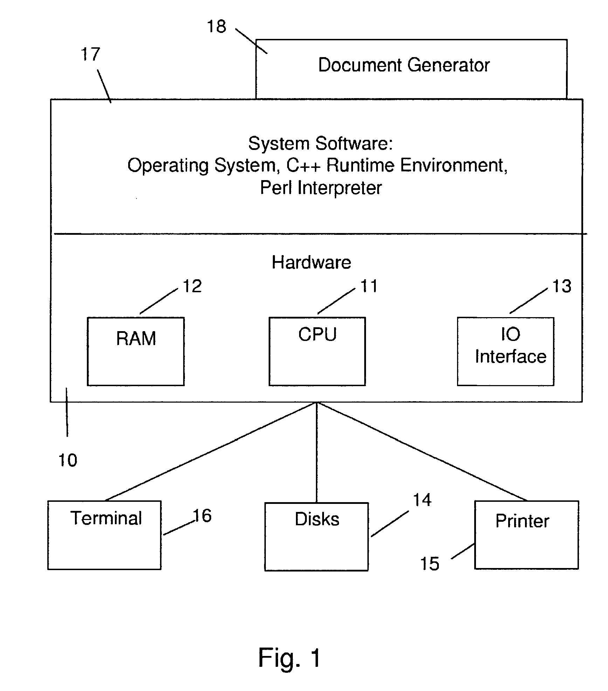

Figure 1 show a schematic representation of a computer system 10 which may be used to operate the invention. The computer system 10 comprises central processing unit 11 with a random access memory 12 and an input/output interface 13 which connects the CPU 11 with disk storages 14, a printer 15 and a terminal 16 having a keyboard and a display unit (not shown). The computer system 10 further comprises system software 17 which includes an operating system, a C++ runtime environment and an interpreter for the programming language Perl. The system 10 is used to operate a document generator 18 which is subsequently described.

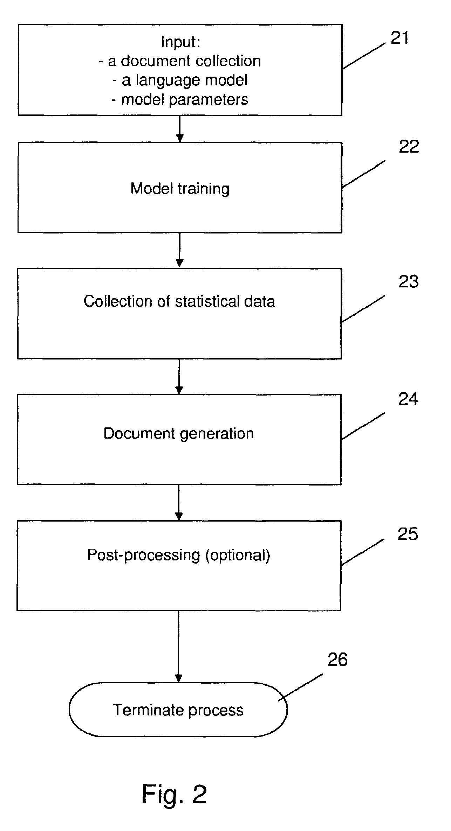

Figure 2 is a general view to the document generation using training documents starting with step 21 of obtaining a collection of text documents as training documents and a language model including also its model parameters. The language model is selected from known models such as n-gram models or probabilistic deterministic context-free grammar (PCFG) models. The training documents are used in step 22 to train the language model. The model training process uses model parameters and performs an analysis of the set of training documents for the building of grammar statistics in step 23. These statistics are used by the document generation performed in step 24 which produces a collection of generated documents. A post-processing check 25 may be required to assess the quality of the generated documents. For example, a statistical analysis of word frequencies may be needed to check the conformance to Zipf's Law and Heap's law against desired values. The process is terminated at 26.

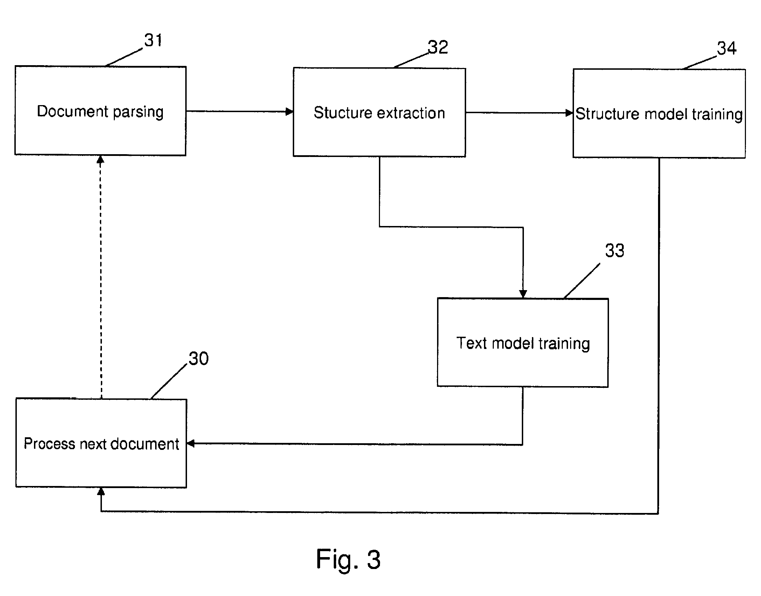

Figure 3 shows a general block diagram of the model training process. The process starts with step 30 by processing the next document which at the begin of the process is the first training document. In step 31 a parsing of the document takes place. Step 32 extracts the structure elements and steps 33 and 34 perform training the combined language and structure models used where step 33 performs the text model training and step 34 performs the training of the structure model. By these steps the language and structure models are adapted to the text and structure elements derived from the processed training document by the parsing step 31 and the structure extraction step 32.

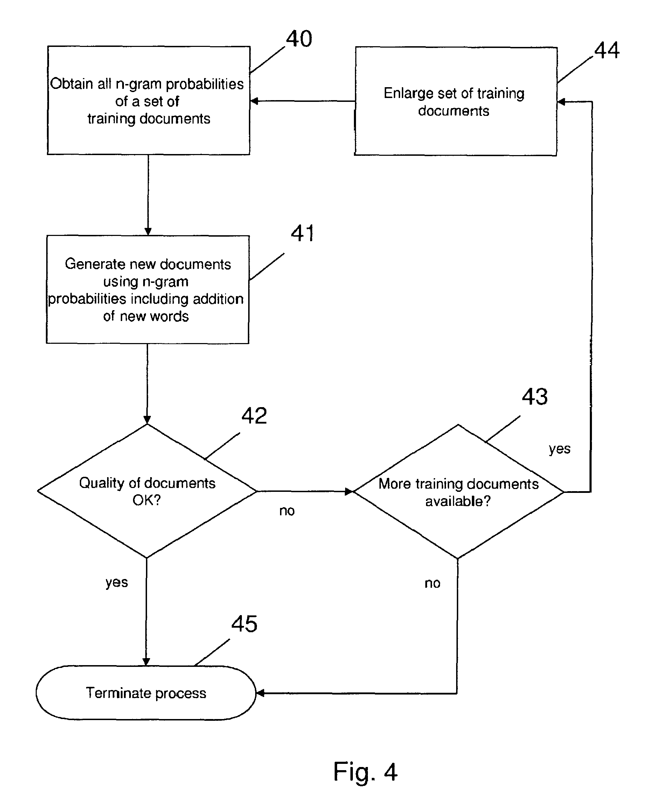

Figure 4 refers to an implementation of the document generation process according to the invention which uses a collection of training programs and a n-gram model as language model. The process starts with step 40 which obtains all n-gram probabilities of a set of training documents collected in step 20. N-gram models are probabilistic grammar models which as such are well known. In a n-gram model the probability of producing a word is only dependent of the (n-1) preceding words, also called history. Preferred n-gram models are bigram or trigram models which provide manageable numbers of probabilities. In step 41 new documents are generated by using the vocabulary of the training set which may be supplemented by the addition of new words, and the n-gram probabilities obtained in step 40 taking account of other statistical parameters of the documents such as the distribution of document sizes. In step 42 the quality of the generated documents is checked. For this purpose it is determined whether the deviations of word frequency as a function of the word rank (Zipf's law) and the growth of the vocabulary as a function of the number of terms (Heap's law) are below user defined thresholds. If the quality of generated documents is not sufficient, the training set is extended by step 44 provided more training documents are available which is checked by step 43. Otherwise the process is terminated at 45. With regard to step 41 it is noted that the addition of new words to the vocabulary of the training documents is performed to ensure that the new documents respect the Heap's law. The new words may be added by replacing words in the vocabulary of the training documents with new words. This replacement takes place with a probability that is increasing with decreasing the frequency rank of the words to be replaced.

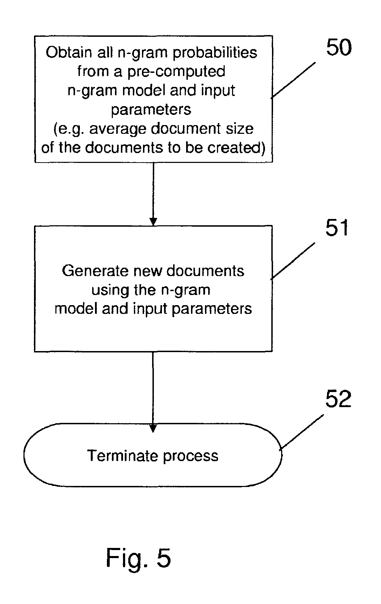

Alternatively, in case where no training documents are available, the document generation may take place by using pre-computed model data which contain the terms and the probabilities of a n-gram model as shown in Figure 5. The step 50 obtains all n-gram probabilities from a pre-computed n-gram model and related input parameters such as the distribution of document sizes. Pre-computing of a n-gram model may take place by performing first a manual definition of the grammatical rules and then training the probabilities against a text document collection. The probabilities and the input parameters obtained in step 50 are used in step 51 to generate new documents by using the pre-computed n-gram model. A quality check and a post-processing according to steps 42 and 25 and the addition of new words may be used but are not obligatory. The process terminates at 52. The statistics of the generated collection of text documents depend solely on the model data. Thus a generic n-gram model would result in generating a collection with a very high dispersion wherein the generated documents fulfil basic statistical properties.

In the following an example of a text is shown which has been generated according to the invention by using a n-gram model with a set of training documents:
finally , if we add our tables to / etc/inetd . conf should look something like this , two LANE clients , LANE service , time of inactivity before the packet # is allowed to continue on . ca/ols/ # Learn is a group of volunteers that use of words can make your life easier and.increase readability of your user's browser. # 2.2.5 ýýDIAGS - script to place an authentication gateway with Linux without learning about Linux assembly programming # RAID-4 interleaves stripes like RAID-0 , but recurrent models can and have multiply-named hard or soft links to collections and other daemons such as FITS from any number of agents behaving and interacting within a minute , you may create a problem for a RaidRunner # Contra APC : If one of its limitations, you won't be able to reach 212.64.94.1. # Not a lot (ktrace and kdump on FreeBSD), Kermit (on the channel associated with this raid set then zero all the scsi tag number of seconds . #

Although this example does not represent a meaningful text, it comprises the essential properties of a natural text which may be part of a text document of the type which allow generating large amounts of documents for test purposes. A more detailed consideration of this text shows that the sentences of this text make some sense but the grammar is in the most sentences incorrect. Another effect is that parenthesis and quotes do not match since n-gram models cannot capture such dependency because it lies outside of their scope. Furthermore, it is visible that a n-gram model may generate rather long sentences. However, these characteristics are not harmful for using such types of texts in a document which is part of a huge collection of text documents to be used for test purposes as explained above.

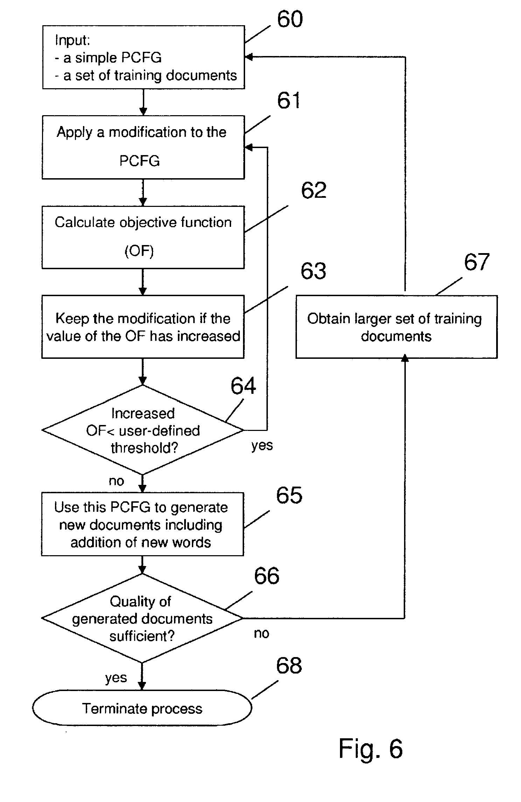

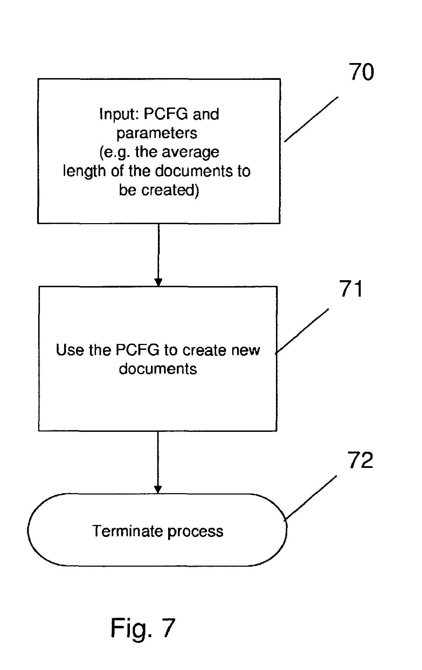

Subsequently an alternative process of modelling the document text by using a probabilistic deterministic context-free grammar (PCFG) is described by reference to Figures 6 and 7. The process shown in Figure 6 uses a probabilistic deterministic context-free grammar (PCFG) model with training documents. The process starts with step 60 by which a simple PCFG is defined and a set of training documents is selected. The characteristics of probabilistic deterministic context-free grammar models as such are well known as may be seen, for example, from the following publications: F. Jelinek, R. Mercer, 'Basic Methods of probabilistic context-free Grammars', Technical Report, Continuous Speech Recognition Group, IBM T.J. Watson Research Center, 1991; and S. F. Chen, 'Bayesian Grammar Induction for Language Modelling', Proceedings of the Meeting of the Association for Computational Linguistics, 1995, pages 228-235 (http://citeseer.ist.psu.edu/300206.htm1).

In step 61 a modification is applied to the selected PCFG. Such modifications comprises various operations applied to the text and structure elements of the PCFG including concatenation, classing, repetition and specialization. In the following step 62 an objective function OF is calculated. The objective function OF may be stated as the probability p(G|O) of a PCFG G for a given set O of training elements. Step 63 keeps the modification if the value of the objective function is ncreased. In step 64 the objective function OF is checked whether it is smaller than a user defined threshold. If necessary, a post-processing may be applied to the inferred grammar. If the objective function OF is above the user defined thresholds, the modified PCFG is used in step 65 to generate new documents. The document generation step 65 may include the addition of new words as described above with reference to Figure 4. furthermore, other statistical parameters, e.g. the distribution of the documents lengths, may be taken into account. If step 64 produces a yes-result, step 61 and the subsequent steps 62-64 are repeated. The quality of the documents generated in step 66 is checked. This includes the determination whether the deviations from Zipf's law and Heap's law are below user defined thresholds. If the quality is sufficient, the process is terminated at 68. Otherwise a larger set of training documents is obtained by step 67 and the process is repeated starting again with step 60.

Alternatively, document generation may take place by using a probabilistic deterministic context-free grammar (PCFG) model directly to generate new documents. Referring to Figure 7, in step 70 a PCFG and its related parameters are selected and used as input. The parameters may, for example, indicate the average length of the documents to be generated. An appropriate PCFG has, for example, been disclosed by H. Schmid, 'LoPar - Design and Implementation', Working Papers of the Special Research Area 'Linguistic Theory and the Foundation of Computational Linguistic', Institut fuer Maschinelle Sprachverarbeitung, University of Stuttgart, Stuttgart 2000, (http://www.ims.uni-stuttgart.de/~schmid/lopar.pdf).
In step 71 the selected PCFG is directly used to generate new documents. Also here, a quality check and a post-processing according to steps 42 and 25 and the addition of new words may be used but are not obligatory. The process is terminated at 72.

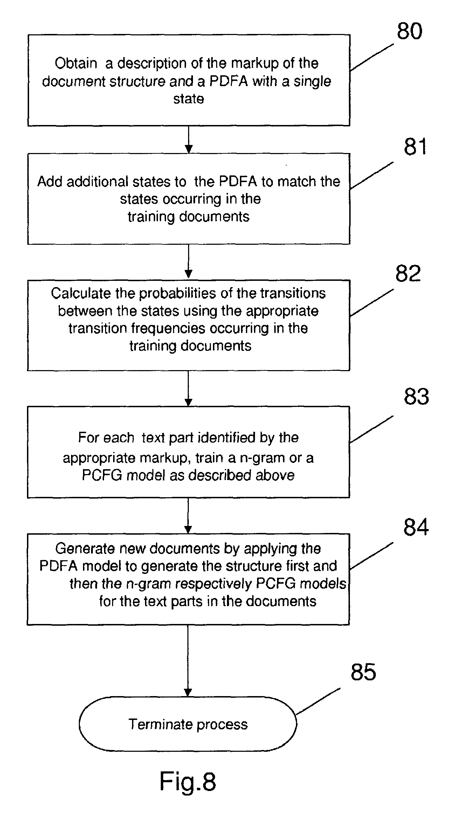

The subsequent description relates to the generation of structured document text. Figure 8 illustrates a process using structured training documents and modelling the structure of the documents to be generated according to the structure of the training documents. For this purpose documents structured by markup languages such as the Standard Generalized Markup Language (SGML) are considered. Structure modelling could be embedded within language models by treating markup tokens as normal words but there are two drawbacks to this approach: SGML comprises a strict syntax and structure wherein each opening tags has to be followed by a closing tag, tag nesting must be consistent etc., and thus it cannot be modelled by the language models described above. Markup tags in documents follow a certain order and have different semantics. For example, while it is not explicitly defined in the document type definition, tags defining a title generally occur at the beginning of a document. This kind of information cannot be modelled by language models because these do not have a document scope.

Furthermore, separating the structure models from the language models is more flexible. I allow to use different language models for different fields of the documents, e.g. a simple n-gram model may be used for titles or section names and a more complete grammar based model may be used for paragraphs.

For the purpose of the subsequent description it is assumed that the SGML document type of the training documents is known and well defined. A simple approach for generating documents using this document type would be to use the "Document Type Definition" (DTD) which is well known and which defines a set of rules specifying the top level tag, how tags should be nested, etc. and thus can be easily converted into a context-free grammar. This approach would produce correct documents with respect to both the SGML syntax and the DTD rules. It is however insufficient especially in cases where the DTD covers a broad range of different document structures. A prominent example for a DTD is HTML. However, tag definition in HTML does not have clear semantics. It allows many ways to use the different tags but only a few from these uses make sense. Therefore, generating documents using only the DTD would produce correct but mostly unrealistic documents.

In order to describe the document structure modelling as used according to the invention in more detail, the following HTML example is considered: Within the <body> element the following tags (among others) can be nested:
- <br / >: line break
- <hr / >: line break and horizontal rule drawing
- <p>: paragraph
- <h1>: heading level 1 (for example, a title)
Herein the convention of the Extended Markup Language XML is used where empty tags (i.e. that contain no children) end with /> instead of >. The fields represent the structure elements of the documents consisting of the text chunks between start and end tag with the tag name defining the field type.

Using the DTD in this case would generate documents with <body> tags whose content would start with <br> or <h1> with equal probabilities although the second case makes much more sense and thus should be more probable.

An improvement of this modelling would be to probabilize the grammar generated by the DTD by giving more weights to rules that actually occur in the training documents. In the considered example, this would mean that a higher probability is assigned as that one calculated by using only the DTD to a <h1> element occurring within the <body> element. However, this approach has still a drawback: Within the <body> element, the previously cited element can occur one or more times ,as defined by the DTD, but only certain sequences make sense. For example, a sequence of line breaks is not realistic while a sequence of paragraphs makes sense. This kind of information is missing from the DTD. It is possible at the expense of compactness to construct DTD's that would avoid such shortcomings but the training documents to be processed have pre-existing DTD's, especially with DTD's for HTML.

Since the DTD does not give sufficient information for modelling document structure, an inference framework for the document structure is used which takes into account that in comparison to human language the markup language is fixed and small, and that a context-free grammar describing SGML markup cannot be ambiguous since there can be only one possible parse.

For the document generation including the analysis of training documents the document structure is defined by the use of a probabilistic deterministic finite automata (PDFA). The PDFA will be conditioned by the use of the training documents, i.e. the transition probabilities between the states of the PDFA are determined and thereafter used to generate the structure of the new documents. As a result new structured documents are obtained.

Referring back to Figure 8, in step 80 a description of the markup of the document structure and a PDFA with a single state are obtained. The document structure is that of the training documents. Step 81 adds additional states to the PDFA to match the states occurring in the training documents. In step 82 the probabilities of the transitions between the states are calculated by using the appropriate transition frequencies occurring in the training documents. Step 83 performs for each text part, as identified by the appropriate markup, a training of a n-gram or a PCFG model as described above in connection with Figures 4 and 6. Step 84 generates new documents by applying the PDFA to generate the document structure and using thereafter a n-gram model respectively a PCFG language model for generating the text parts of the documents. Also with regard to step 84 reference is made to Figures 4 and 6 and the related description. The process shown in Figure 8 is terminated by step 85.

Preferably the language model is trained with a set of documents that have a similar document structure. This corresponds to the reality which is represented, for example, by HTML pages from a number of related web sites. On this basis, the generated documents exhibit the same structure as the training documents.

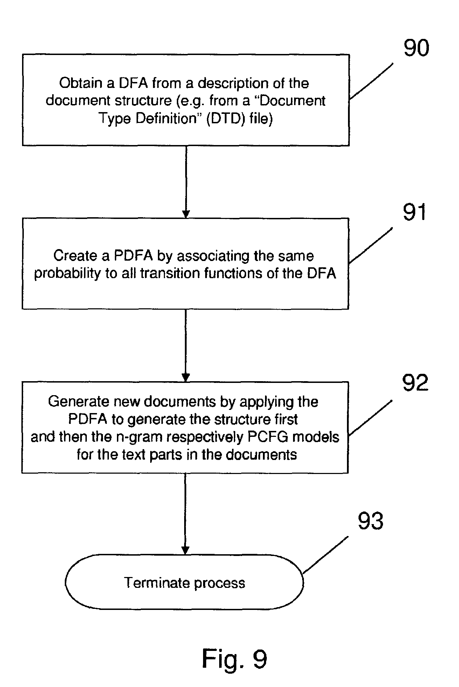

In cases where no training documents are available the language model may directly generate documents using the DTD as the base grammar, without weighting in any way the possible alternatives. Thus, every valid document has the same possibility to be generated. For some very structured DTD's, such as XML databases, this would be sufficient. The text parts are then generated as described above by using n-gram or PCFG models. This is illustrated in Figure 9. In step 90 a deterministic finite automata (DFA) is obtained from a description of the structure of the text documents to be generated. This description may, for example, be a Document Type Definition (DTD). Step 91 creates a probabilistic deterministic finite automata (PDFA) by associating the same probability to all transition functions of the deterministic finite automata (DFA). Step 92 generates new documents by applying the probabilistic deterministic finite automata (PDFA) in a first part of step 92 to generate the structure of the new documents and, in a second part of step 92, to generate a n-gram model or a probabilistic deterministic context-free grammar (PCFG) model to be used for generating the text parts of the new documents. Thereafter step 93 terminates the process.

While the invention is disclosed with reference to the described embodiments, modifications or other implementations of the invention are within the scope of the invention as defined in the claims.

## Claims

1. A method for the generation of text documents, comprising the steps of:
(a) collecting a set of text documents as training documents and selecting a language model including model parameters (21);
(b) training of the language model by using the training documents and the model parameters (22);
(c) generating new documents (24) by using said probabilities and by using additional words beyond the words contained in the training documents, the new documents comprising the same distribution of their length as the training documents; and
(d) determine if the deviations of the word frequency as a function of the word rank (Zipf's law) and the growths of the vocabulary as a function of the number of terms (Heap's law) are below user defined thresholds (42, 66) and accepting only new documents which fulfil this condition.

2. The method of claim 1 wherein step (a) comprises the step of selecting a larger set of text documents as training documents (44, 67) if step (d) indicates that the quality of the generated documents is not sufficient.

3. The method of claim 1 wherein step (c) comprises the step of choosing new words by replacing word of the vocabulary of the training documents with new words where the replacement takes place with a probability that increases with decreasing the frequency rank of the words to be replaced.

4. A method for the modelling, analysis and generation of text documents, comprising the steps of:
(a) collecting a set of text documents as training documents;
(b) computing the n-gram probabilities of the words contained in the training documents (40);
(c) generating new documents by using said probabilities (41) and by using additional words which are not contained in the training documents, the new documents comprising the same distribution of their length as the training documents; and
(d) determine if the deviations of the word frequency as a function of the word rank (Zipf's law) and the growths of the vocabulary as a function of the number of terms (Heap's law) are below user defined thresholds (92) .

5. The method of claim 4 wherein step (a) comprises the step of increasing the training set if the quality of the new documents are not sufficient (44).

6. The method of claim 4 wherein step (d) comprises the step of the modifying the user defined thresholds if the new documents are not acceptable.

7. The method of claim 4 wherein step (c) comprises the step of adding new words by replacing words from the selected set of training documents with new words.

8. The method of claim 4 wherein pre-computed model data are used to generate new documents (50, 51), the pre-computed model data contain the terms and the probabilities of the n-gram model.

9. A method for the modelling, analysis and generation of text documents comprising the steps of:
(a) collecting a set of text documents as training documents;
(b) selecting a probabilistic deterministic context-free grammar (PCFG) model having a finite set of of nonterminal symbols, a finite set of terminal symbols is disjoint from the set of nonterminal symbols, a finite set R of production rules and an objective function (60);
(c) applying a modification to the grammar model for changing the terminal and nonterminal symbols of the training documents and to the structure elements of the training documents (61);
(d) computing of the objective function for the training documents by using various approximations (62), and hold the modification if the objective function has increased (63);
(e) repeating step (c) until the modification result in an increase of the objective function to a user defined threshold (64);
(f) generating new documents by using the modified grammar model and by using additional words beyond the words contained in the training documents, the new documents comprising the same distribution of their length as the training documents (65); and
(g) determine if the deviations of the word frequency as a function of the word rank (Zipf's law) and the growths of the vocabulary as a function of the number of terms (Heap's law) are below user defined thresholds (66).

10. The method of claim 9 wherein step (a) comprises the step of selecting a larger set of text documents as training documents if step (f) indicates that the quality of the generated documents is not sufficient (67).

11. The method of claim 9 wherein step (d) comprises the step of modifying the user defined thresholds if the new document are not acceptable.

12. The method of claim 9 wherein step (c) comprises the step of adding new words by replacing words from the selected set of training documents with new words.

13. The method of claim 9 wherein a probabilistic deterministic context-free grammar (PCFG) is directly used for the generating new documents (70, 71).

14. A method for the generation of structured text documents comprising the steps of:
(a) collecting a set of structured text documents as training documents;
(b) selecting a language model for the unstructured text parts and training of the language model by using training documents and the model parameters (22);
(c) describing the document structure of the training documents by using a selected markup language (80) ;
(d) obtaining a probabilistic deterministic finite automata (PDFA) having a single state (80);
(e) adding additional states to the probabilistic deterministic finite automata (PDFA) to match the states occurring in the training documents (81);
(f) calculating the probabilities of the transitions between the states using the appropriate transition frequencies which are occurring in the training documents (82);
(g) training of the language model for each text part identified by the selected markup language (83);
(h) generating the document structure of new documents (84) by applying the probabilistic deterministic finite automata (PDFA);
(i) generating the text parts of the new documents (84) by using said computed probabilities and by using additional words beyond the words contained in the training documents, the new documents comprising the same distribution of their length as the training documents; and
(j) determine if the deviations of the word frequency as a function of the word rank (Zipf's law) and the growths of the vocabulary as a function of the number of terms (Heap's law) are below user defined thresholds and accepting only new documents which fulfil this condition (42, 66).

15. The method of claim 14 wherein step (a) comprises the step of selecting a larger set of structured text documents as training documents if step (j) indicates that the quality of the generated documents is not sufficient (44, 67).

16. The method of claim 14 wherein step (i) comprises the step of choosing new words by replacing word of the vocabulary of the training documents with new words where the replacement takes place with a probability that is increasing with decreasing the frequency rank of the words to be replaced.

17. The method of claim 14 wherein step (b) selects a probabilistic deterministic context-free grammar (PCFG) having a finite set of nonterminal symbols, a finite set of terminal symbols that is disjoint from the set of nonterminal symbols, a finite set R of production rules and an objective function; and comprising the steps of
(k) applying a modification to the grammar which changes the terminal and nonterminal symbols and to the structure elements of the training documents (61);
(l) computing an objective function for the training documents (62) by using various approximations, hold the modification if the objective function has increased (63); and
(m) repeating step (k) until the modification results in an increase of the objective function to a threshold defined by the user.

18. A method for the generation of structured text documents comprising the steps of
obtaining a deterministic finite automata (90) from a description of the structure of the text documents to be generated;
creating a probabilistic deterministic finite automata (91) by associating the same probability to all transition functions of the deterministic finite automata; and
generating new documents (92) by applying said probabilistic deterministic finite automata (PDFA) to firstly generate the structure of the new documents and secondly to generate a n-gram model or a probabilistic deterministic context-free grammar (PCFG) model to be used for generating the text parts of the new documents.

19. An apparatus for the generation of text documents, using a collection of text documents as training documents, comprising
(a) means (41, 65) for generating new documents by using a language model and its model parameters and by using additional words beyond the words contained in the training documents, the new documents comprising the same distribution of their length as the training documents; and
(b) means (42, 66) for determination if the deviations of the word frequency as a function of the word rank (Zipf's law) and the growths of the vocabulary as a function of the number of terms (Heap's law) are below predefined thresholds and for accepting only new documents which fulfil this condition.

20. An apparatus for the generation of structured text documents, using a set of structured text documents as training documents, comprising
(a) means (80) for describing the document structure of the training documents by using a selected markup language;
(b) a probabilistic deterministic finite automata (PDFA) having a single state (80) and means (81) for adding additional states to the probabilistic deterministic finite automata (PDFA) to match the states occurring in the training documents;
(c) means (82) for calculating the probabilities of the transitions between the states using the appropriate transition frequencies which are occurring in the training documents;
(d) means (83) for training a language model for each text part identified by the selected markup language;
(e) means (84) for generating the document structure of new documents by using the probabilistic deterministic finite automata (PDFA);
(f) means (84) for generating the text parts of the new documents by using said language model and its model parameters and by using additional words beyond the words contained in the training documents, the new documents comprising the same distribution of their length as the training documents; and
(g) means for determination if the deviations of the word frequency as a function of the word rank (Zipf's law and the growths of the vocabulary as a function of the number of terms (Heap's law) are below user defined thresholds and for accepting only new documents which fulfil this condition.

21. The method/apparatus of claims 1, 4, 19 and 20 wherein n-gram probabilities are used as language model.

22. The method/apparatus of claims 1, 4, 19 and 20 wherein a probabilistic deterministic context-free grammar (PCFG) is used as language model.

23. An apparatus for the generation of structured text documents comprising
means (90) for obtaining a deterministic finite automata from a description of the structure of the text documents to be generated;
means (91) for creating a probabilistic deterministic finite automata by associating the same probability to all transition functions of the deterministic finite automata; and
means (92) for generating new documents by applying said probabilistic deterministic finite automata (PDFA) to firstly generate the structure of the new documents and secondly to generate a n-gram model or a probabilistic deterministic context-free grammar (PCFG) to be used for generating the text parts of the new documents.

24. A computer program product comprising program code means stored on a computer readable medium for performing the steps of any one of the claims 14-18 when said program is run on a computer system.
